# EUROPÄISCHE PATENTSCHRIFT

(11) **EP 1 051 552 B1**
(45) Veröffentlichungstag und Bekanntmachung des Hinweises auf die Patenterteilung: **23.04.2003**
(21) Anmeldenummer: 99906110.4
(22) Anmeldetag: 08.01.1999
(51) Int. Cl.: E02D 3/00, B29D 28/00, D04H 3/14, E01C 21/00

(54) **TEXTILES GITTER**
TEXTILE GRATING
STRUCTURE RETICULAIRE TEXTILE

(30) Priorität: 28.01.1998 DE 19803168
(43) Veröffentlichungstag der Anmeldung: 15.11.2000
(73) Patentinhaber: Huesker Synthetic GmbH, 48712 Gescher (DE)
(72) Erfinder: PINTZ, Heiko, D-48527 Nordhorn (DE)
(74) Vertreter: Freischem, Stephan, Dipl.-Ing.
(86) Internationale Anmeldenummer: EP9900067
(87) Internationale Veröffentlichungsnummer: WO99039055

(56) Entgegenhaltungen:
- WO-A-97/47796
- DE-A- 2 000 937
- GB-A- 2 266 540
- US-A- 5 045 377

## Beschreibung

Die Erfindung betrifft ein weitmaschiges textiles Gitter für Armierungszwecke im Tiefbau, insbesondere zum Bewehren von Bodenschichten, bestehend aus vorzugsweise durch Weben oder Wirken miteinander verbundenen Kettfadengruppen und Schußfadengruppen, die jeweils zur benachbarten, parallel verlaufenden Fadengruppe einen Abstand von mindestens 8 mm aufweisen, und deren Einzelfäden von hochfesten Garnen gebildet werden, wobei die Kettfadengruppen und Schußfadengruppen des textilen Gitters mit einer Polymerbeschichtung ummantelt sind.

Die Erfindung betrifft weiterhin ein Verfahren zur Herstellung eines derartigen Gitters.

Derartige textile Gitter werden vorzugsweise im Webverfahren hergestellt. Das deutsche Patent 20 00 937 offenbart ein Webverfahren für ein derartiges textiles Gitter unter Verwendung eines Dreherfadens, der mit geringer Spannung zickzackförmig über die Kettfadengruppen geführt ist und an den Seiten der Kettfadengruppen jeweils unter einer Schußfadengruppe verläuft.

Die Anmelderin vertreibt ein derartiges Gewebe, bestehend aus hochfesten Polyesterfäden mit einer PVC-Ummantelung zur Bewehrung von Bodenschichten unter der Bezeichnung "Fortrac". Ein ähnliches Polyestergewebe mit einer bitumenhaltigen Ummantelung wird zur Bewehrung von Asphaltschichten im Straßenbau unter der Markenbezeichnung "HaTelit" von der Anmelderin vertrieben. Polyestergarne aber auch PVA- oder Aramidgarne gewährleisten eine dauerhafte Bewehrung. Je nach den Erfordernissen können aber auch andere synthetische Materialien, z.B. Polyolefine wie Polyethylen oder Polypropylen, zur Bildung der hochfesten Garne verwendet werden.

Neben der Verbindung der Kettfadengruppen mit den Schußfadengruppen durch die beschriebene Wehtechnik mit Dreherfaden sind selbstverständlich andere Verbindungstechniken möglich. Beispielsweise können übereinanderliegende Fadengruppen, die nicht miteinander verwebt werden, zueinander mittels Dreherfaden oder anderen Bindefäden (z.B. durch Kettenwirken) oder mittels Haftmitteln fixiert werden. Eine ausreichende Fixierung des fertigen Gitters kann anschließend durch die Polymerbeschichtung erzielt werden.

Die beschriebenen Armierungsgitter haben sich in der Vergangenheit umfangreich im Tiefbau bewährt. Sie weisen aufgrund der hochfesten synthetischen Materialien, aus denen die Garne gebildet sind, sowie aufgrund der Ummantelung eine hervorragende Beständigkeit gegen Verrottung und Verwitterung auf. Aufgrund ihrer großen Maschen dringen beim Verbauen der Gitter Teilchen des Bodens oder der jeweiligen armierten Schicht durch die Maschen und bewirken so eine Verzahnung und eine enge Bindung zwischen dem textilen Gitter und der armierten Schicht.

Die Polymerbeschichtung der bekannten textilen Gitter ist relativ dicht, starr und unflexibel. Durch das hohe Gewicht aufgrund der großen Dichte und durch die Starrheit des Gitters können sich Probleme bei dessen Handhabung während des Einbaus ergeben. Aufgrund der starren Beschichtung ist eine Verformung des Gitters selbst nur im geringen Umfang möglich. Das "Verkrallen" zwischen Gitter und armierter Schicht geschieht daher allein durch Teilchen, die die Maschen des Gitters durchragen. Die starre und relativ dünne Polymerbeschichtung kann beim Einbau oder im eingebauten Zustand Risse bekommen oder teilweise abplatzen, so daß der Schutz der Fadengruppen durch die Polymerbeschichtung beeinträchtigt werden kann.

Aufgabe der Erfindung ist es, ein textiles Gitter sowie ein Verfahren zu dessen Herstellung zu schaffen, welches die zuvor beschriebenen Nachteile weitgehend beseitigt.

Diese Aufgabe wird durch ein textiles Gitter der eingangs beschriebenen Art gelöst, welches dadurch gekennzeichnet ist, daß in der Polymerbeschichtung regelmäßig verteilte Gaseinschlüsse enthalten sind, so daß die Polymerbeschichtung eine schaumartige Struktur aufweist.

Die schaumartige Struktur der Polymerbeschichtung hat als direkte Folge eine größere Flexibilität dieser Beschichtung sowie eine geringere spezifische Dichte. Das spezifische Gewicht des textilen Gitters wird dadurch reduziert, so daß seine Handhabung vereinfacht wird. Auch wird die Beschichtung insgesamt weicher, so daß das Gitter eine höhere Flexibilität erhält, wodurch die Handhabung wiederum vereinfacht wird.

Im Umkehrschluß erhöht sich durch die Aufschäumung der Polymerbeschichtung deren spezifisches Volumen, so daß selbst bei geringerem Gewicht eine größere Schichtdicke der Polymerbeschichtung verwirklicht werden kann. Diese Schicht weist aufgrund der Aufschäumung auch eine größere elastische Verformbarkeit auf. Aufgrund der größeren Schichtdicke und der herabgesetzten Gefahr eines Abplatzens der Polymerbeschichtung durch die höhere Elastizität wird die Gefahr einer mechanischen Beschädigung der Polymerbeschichtung während des Einbaus herabgesetzt.

Schließlich weisen die einzelnen Fadengruppen, die durch eine geschäumte Polymerbeschichtung ummantelt sind, eine höhere Flexibilität und aufgrund der schaumartigen Ummantelung eine Kompressibilität auf, so daß das Verkrallen der armierten Bodenschicht mit dem textilen Gitter nicht nur durch Teilchen erfolgt, welche die Gittermaschen durchragen. sondern auch durch Teilchen, welche lokale Verformungen und Kompressionen der einzelnen Fadengruppen bewirken.

Vorzugsweise werden bei dem erfindungsgemäßen textilen Gitter - wie bei dem Stand der Technik - Einzelfäden aus Multifilamentgarnen gewählt. Diese werden nicht nur mit der Polymerbeschichtung ummantelt, sondern von dieser durchtränkt. Auf diese Weise erhält jeder Faden der Kettfadengruppen und Schußfadengruppen beim Durchtränken und Ummanteln mit der geschäumten Polymerbeschichtung ein größeres Volumen und eine Kompressibilität.

Für ein Bodenbewehrungsgitter kann die Beschichtung aus PVC (Polyvinylclorid) gebildet werden, welches mit Weichmachern versetzt wird und eine fließfähige, pastöse Masse bildet, welche nach dem Eintauchen des Gitters beim Erhitzen auf eine Temperatur von etwa 200°C geliert. Alternativ können Polyacryl- oder Polyurethanbeschichtungen verwendet werden die in Wasserdispersionen auf das textile Gitter aufgetragen werden und bei Abdampfen des Wassers polymerisieren Selbstverständlich ist auch die Verwendung einer heiß aufgetragenen bitumenhaltigen Beschichtung möglich.

Die Gaseinschlüsse in der Polymerbeschichtung sollten möglichst klein sein und vorzugsweise eine Größe von 0.3 mm nicht überschreiten.

Bei einem Verfahren zur Herstellung des erfindungsgemäßen textilen Gitters werden zunächst hochfeste Kettfäden und Schußfäden insbesondere durch Web- oder Wirktechnik derart miteinander verbunden, daß jeweils Kettfadengruppen und Schußfadengruppen zusammengefaßt werden, die jeweils zur benachbarten, parallel verlaufenden Fadengruppe einen Abstand von mindestens 8 mm aufweisen. Anschließend werden die Fadengruppen mit einer fließfähigen Masse, welche eine polymerbildende Substanz enthält, benetzt. Dieses Benetzen erfolgt in der Regel durch Eintauchen des Gitters in einen Behälter mit der fließfähigen Masse. Alternativ kann die fließfähige Masse auf die Kettfadengruppen und die Schußfadengruppen aufgesprüht oder auf andere Weise aufgebracht werden. Nach dem Benetzen muß das Abbinden des Polymers bewirkt werden. Bei heiß abbindenden Polymeren wird das benetzte Gitter hierzu erhitzt.

Zur Lösung der erfindungsgemäßen Aufgabe wird der fließfähigen Masse ein Treibmittel zugesetzt, welches während des Abbindens des Polymers Gaseinschlüsse erzeugt.

Wie bereits erwähnt, kann als fließfähige Masse eine pastöse Mischung aus PVC und einem Weichmacher verwendet werden, welche unter Hitzeeinwirkung geliert. Alternativ kann eine Polymerdispersion, z.B. eine Latex-, Polyacryl- oder Polyurethandispersion, zum Benetzen des Gitters verwendet werden, wobei das Wasser der Dispersion unter Hitzeeinwirkung abdampft und die Beschichtung polymerisiert.

Das Treibmittel ist in Abhängigkeit von dem verwendeten Polymer und in Abhängigkeit von der gewünschten Struktur des geschäumten Polymers zu wählen. Es sind unterschiedliche Treibmittel zur Bildung von Gaseinschlüssen bekannt. Beispielsweise werden als physikalische Treibmittel Gase (z.B. Stickstoff) oder leicht verdampfende Flüssigkeiten (Kohlenwasserstoffe, Chlorkohlenwasserstoffe, Trichlorethylen o.ä.) zur Bildung von Kunststoffschäumen eingesetzt. Zur Bildung der erfindungsgemäßen geschäumten Ummantelung sind insbesondere chemische Treibmittel geeignet, welche aus Feststoffen bestehen, die bei höherer Temperatur unter Freisetzung von Gasen zerfallen. Beispiele hierfür sind Azo-Verbindungen (z.B. Azodicarbonamid). N-Nitrosoverbindungen und Sulfonylhydrazide. die bei Temperaturen zwischen etwa 100°C und 275°C pro Gramm 100 bis 300 ml Stickstoff abspalten. Durch Beimischungen, sogenannte "Kicker", die beispielsweise aus Metallverbindungen wie den Pb und Zn-Stabilisatoren in PVC-Mischungen bestehen, kann die Temperatur, bei der das Gas treigesetzt wird, eingestellt werden. Der Aufbau des erfindungsgemäßen textilen Gitters geht besser aus den beigefügten Zeichnungen hervor, welche eine bevorzugte Ausführungsform dieses Gitters zeigen.

Dabei zeigt
- Fig. 1: eine Draufsicht auf ein gemäß dem deutschen Patent 20 00 937 hergestelltes Gittergewebe ohne Polymerbeschichtung und
- Fig. 2: eine Draufsicht auf das Gitter aus Fig. 1 mit aufgebrachter Beschichtung.

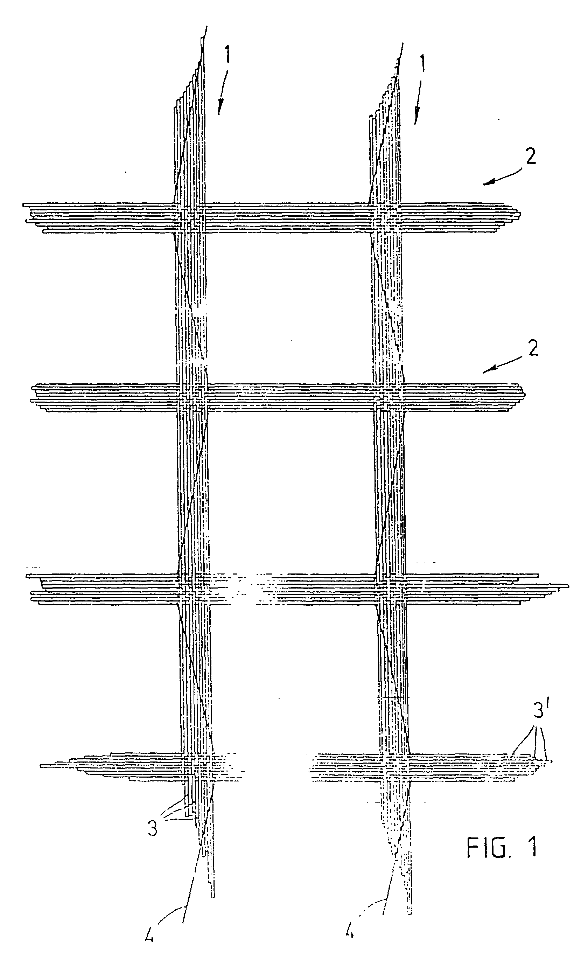

Das in Fig. 1 dargestellte weitmaschige Gittergewebe weist Kettfadengruppen 1 und Schußfadengruppen 2 auf, die sich jeweils aus zwölf parallelen Fäden 3 bzw. 3' aus multifilamentem Polyestergarn zusammensetzen. Der Abstand der Kettfadengruppen 1 voneinander sowie der Abstand der Schußfadengruppen 2 voneinander beträgt etwa 40 mm. Jede Kettfadengruppe 1 ist von einem Dreherfaden 4 begleitet, der zickzackförmig über die Kettfadengruppe 1 geführt ist und an den Seiten der Kettfadengruppe 1 jeweils unter einer Schußfadengruppe 2 verläuft.

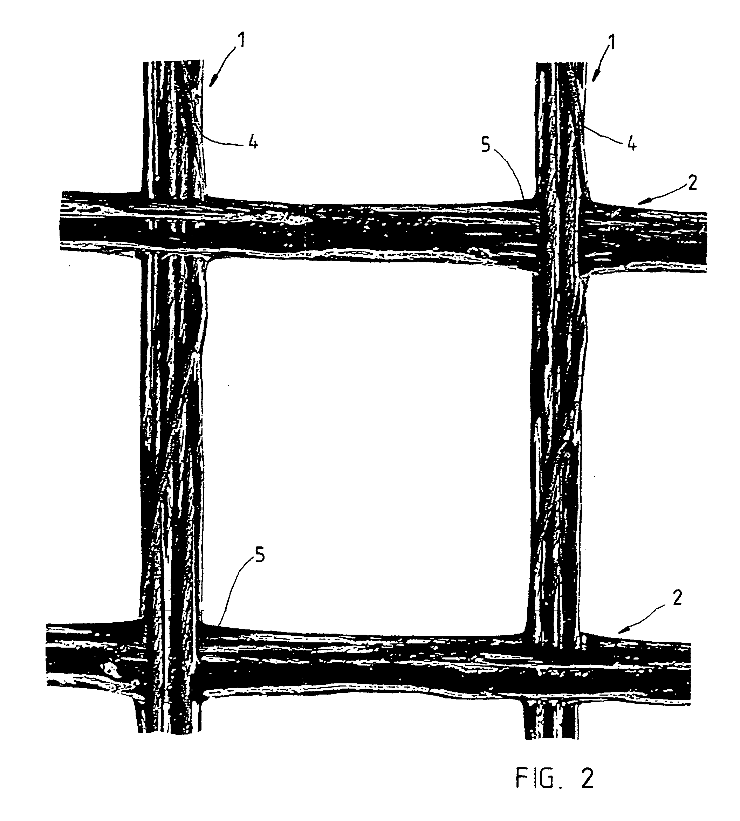

Das auf diese Weise hergestellte Gittergewebe wird nach dem Weben übcr seine gesamte Breite in ein Bad mit einer fließfähigen Masse, welche eine polymerbildende Substanz enthält, eingetaucht. Dabei legt sich, wie in Fig. 2 zu erkennen, eine geschlossene Polymerbeschichtung 5 um die Kettfadengruppen 1 und die Schußfadengruppen 2 und verbindet diese Fadengruppen 1,2 jeweils zu einem geschlossenen Strang. Die Polymerbeschichtung weist nur eine geringe Dicke (im Durchschnitt unter 1 mm) auf. Die in ihr eingeschlossenen Gasblasen sind weitgehend mit bloßem Auge nicht zu erkennen und weisen einen Durchmesser von unter 0.3 mm auf. Durch Inhomogenitäten in der Verteilung des Treibmittels können aber auch örtlich größere Gasblasen entstehen.

Vorzugsweise wird beim Eintauchen des textilen Gitters in die fließfähige Masse ein Verbinden aller Fäden einer Fadengruppe 1,2 miteinander sowie ein Durchtranken der einzelnen Fäden 3.3' bewirkt. Je nach Einsatzzweck kann es aber auch sinnvoll sein, die einzelnen Fäden 3.3' nur an ihrer Außenseite zu ummanteln oder keine vollständige homogene Verbindung der Einzelfäden der Fadengruppen mitemander zu bewirken.

## Patentansprüche

1. Weitmaschiges textiles Gitter für Armierungszwecke im Tiefbau, insbesondere zum Bewehren von Bodenschichten, bestehend aus vorzugsweise durch Weben oder Wirken miteinander verbundenen Kettfadengruppen (1) und Schußfadengruppen (2), die jeweils zur benachbarten, parallel verlaufenden Fadengruppe (1,2) einen Abstand von mindestens 8 mm aufweisen, und deren Einzelfäden (3,3') von hochfesten Garnen gebildet werden, wobei die Kettfadengruppen (1) und Schußfadengruppen (2) des textilen Gitters mit einer Polymerbeschichtung (5) ummantelt sind, **dadurch gekennzeichnet, daß** in der Polymerbeschichtung (5) regelmäßig verteilte Gaseinschlüsse enthalten sind, so daß die Polymerbeschichtung (5) eine schaumartige Struktur aufweist.

2. Textiles Gitter nach Anspruch 1, **dadurch gekennzeichnet, daß** die Einzelfäden (3,3') der Kettfadengruppe (1) und der Schußfadengruppe (2) aus Multifilamentgarnen bestehen, die von der schaumartigen Polymerbeschichtung (5) durchtränkt sind.

3. Textiles Gitter nach Anspruch 1 oder 2, **dadurch gekennzeichnet, daß** die Polymerbeschichtung (5) aus PVC besteht.

4. Textiles Gitter nach einem der vorangehenden Ansprüche, **dadurch gekennzeichnet, daß** die Gaseinschlüsse einen Durchmesser von weniger als 1 mm, vorzugsweise von weniger als 0,3 mm aufweisen.

5. Verfahren zur Herstellung eines textilen Gitters für Armierungszwecke im Tiefbau, bei dem hochfeste Kettfäden (3) und Schußfäden (3') insbesondere durch Web- oder Wirktechnik derart miteinander verbunden werden, daß sie jeweils zu Kettfadengruppen (1) und Schußfadengruppen (2) zusammengefaßt werden. die jeweils zur benachbarten, parallel verlaufenden Fadengruppe (1,2) einen Abstand von mindestens 8 mm aufweisen, und bei dem die Fadengruppen (1,2) anschließend mit einer fließfähigen Masse, die eine polymerbildende Substanz enthält, benetzt und durch Abbinden des Polymers mit einer Beschichtung (5) ummantelt werden, **dadurch gekennzeichnet, daß** der fließfähigen Masse ein Treibmittel zugesetzt wird, welches während des Abbindens des Polymers Gaseinschlüsse erzeugt.

6. Verfahren nach Anspruch 5, **dadurch gekennzeichnet, daß** die pastöse Mischung aus mit einem Weichmacher versetzten PVC besteht und daß das textile Gitter zum Gelieren der Polymerbeschichtung aus PVC auf eine hohe Temperatur, vorzugsweise etwa 200°C, erhitzt wird.

7. Verfahren nach Anspruch 5, **dadurch gekennzeichnet, daß** die fließfähige Masse von einer Polymer-Dispersion, z.B. einer Latex-, Polyacryl- oder Polyurethandispersion, gebildet wird und daß das textile Gitter zum Verdampfen des in der Dispersion enthaltenen Wassers und zur Polymerisation auf eine hohe Temperatur oberhalb von 100°C erhitzt wird.

8. Verfahren nach einem Ansprüche 5 bis 8, **dadurch gekennzeichnet, daß** ein Treibmittel verwendet wird, das bei einer hohen Temperaturen von über 100°C Gasblasen freisetzt.

## Claims

1. A wide-mesh textile grating for reinforcement purposes in civil engineering, in particular for reinforcing ground layers, comprising weft thread groups (2) and warp thread groups (I) which are connected together preferably by weaving or knitting and which are each at a spacing of at least 8 mm relative to the respectively adjacent parallel thread group (1, 2) and the individual threads (3, 3') of which are formed by high-strength yarns, wherein the warp thread groups (1) and the weft thread groups (2) of the textile grating are covered by a polymer coating (5), **characterised in that** the polymer coating (5) contains regularly distributed gas inclusions so that the polymer coating (5) is of a foam-like structure.

2. A textile grating according to claim 1 **characterised in that** the individual threads (3, 3') of the warp thread group (1) and the weft thread group (2) comprise multifilament yarns which are impregnated by the foam-like polymer coating (5).

3. A textile grating according to claim 1 or claim 2 **characterised in that** the polymer coating (5) comprises PVC.

4. A textile grating according to one of the preceding claims **characterised in that** the gas inclusions are of a diameter of less than 1 mm, preferably less than 0.3 mm.

5. A method of producing a textile grating for reinforcement purposes in civil engineering in which high-strength warp threads (3) and weft threads (3') are connected together in particular by a weaving or knitting procedure in such a way that they are respectively combined together to form warp thread groups (1) and weft thread groups (2) which are each at a spacing of at least 8 mm with respect to the respectively adjacent parallel thread group (1, 2), and wherein the thread groups (1, 2) are then wetted with a material which is capable of flow and which contains a polymer-forming substance and are covered with a coating (5) by virtue of setting of the polymer, **characterised in that** added to the material which is capable of flow is a propellant which produces gas inclusions during setting of the polymer.

6. A method according to claim 5 **characterised in that** the pasty mixture comprises PVC mixed with a plasticiser and that the textile grating is heated to a high temperature, preferably about 200°C, for gelling the polymer coating of PVC.

7. A method according to claim 5 **characterised in that** the material which is capable of flow is formed by a polymer dispersion, for example a latex, polyacrylic or polyurethane dispersion, and that the textile grating is heated to a high temperature above 100°C for evaporation of the water contained in the dispersion and for polymerisation.

8. A method according to one of claims 5 to 8 **characterised by** the use of a propellant which liberates gas bubbles at a high temperature of over 100°C.

## Revendications

1. Structure réticulaire textile à larges mailles servant de renfort en génie civil, en particulier pour le renforcement de couches de sol, constituée de groupes de fils de chaîne (1) et de groupes de fils de trame (2) de préférence reliés les uns aux autres par tissage ou tricotage, distants chacun du groupe de fils parallèle voisin (1, 2) d'au moins 8 mm et dont les fils constitutifs (3, 3') consistent en des fils ultra-résistants, les groupes de fils de chaîne (1) et les groupes de fils de trame (2) de la structure réticulaire textile étant enrobés d'un revêtement polymère (5), **caractérisée en ce que** ledit revêtement polymère (5) contient des inclusions de gaz uniformément réparties, de sorte qu'il présente une structure alvéolaire.

2. Structure réticulaire textile selon la revendication 1, **caractérisée en ce que** les fils constitutifs (3, 3') du groupe de fils de chaîne (1) et du groupe de fils de trame (2) sont des fils multifilaments imprégnés du revêtement polymère (5) à structure alvéolaire.

3. Structure réticulaire textile selon la revendication 1 ou 2, **caractérisée en ce que** le revêtement polymère (5) est en PVC.

4. Structure réticulaire textile selon l'une des revendications précédentes, **caractérisée en ce que** les inclusions de gaz présentent un diamètre inférieur à 1 mm et de préférence inférieur à 0,3 mm.

5. Procédé de fabrication d'une structure réticulaire textile servant de renfort en génie civil, dans lequel des fils de chaîne (3) et des fils de trame (3') ultrarésistants sont reliés les uns aux autres en particulier par tissage ou tricotage, de façon à être rassemblés respectivement en groupes de fils de chaîne (1) et groupes de fils de trame (2), chaque groupe étant distant du groupe de fils parallèle voisin (1, 2) d'au moins 8 mm, et dans lequel les groupes de fils (1, 2) sont ensuite imprégnés d'une masse coulable contenant une substance formant un polymère, et enrobés d'un revêtement (5) par durcissement du polymère, **caractérisé en ce que** la masse coulable est additionnée d'un agent moussant, qui produit les inclusions d'air pendant le durcissement du polymère.

6. Procédé selon la revendication 5, **caractérisé en ce que** le mélange pâteux consiste en un PVC plastifié et **en ce que** la structure réticulaire textile est portée à haute température, de préférence de l'ordre de 200 °C, pour gélifier le revêtement polymère en PVC.

7. Procédé selon la revendication 5, **caractérisé en ce que** la masse coulable consiste en une dispersion de polymère, par exemple une dispersion de latex, de polyacryle, ou de polyuréthane, et **en ce que** la structure réticulaire textile est portée à une température élevée, supérieure à 100 °C, en vue de l'évaporation de l'eau contenue dans la dispersion et de la polymérisation.

8. Procédé selon l'une des revendications 5 à 7, **caractérisé en ce qu'**il utilise un agent moussant qui libère des bulles de gaz aux températures élevées supérieures à 100 °C.
